**Europäisches Patentamt**

**European Patent Office**

**Office européen des brevets**

(19)

(11) Veröffentlichungsnummer: **0 216 726**
**B1**

(12) **EUROPÄISCHE PATENTSCHRIFT**

(45) Veröffentlichungstag der Patentschrift:
23.11.88

(21) Anmeldenummer: 86810253.4

(22) Anmeldetag: 09.06.86

(51) Int. Cl.⁴: **B 65 B 23/12**, B 65 G 43/10

(54) Verfahren und Vorrichtung zur Förderung von flachen Gegenständen, insbesondere Biskuits.

(30) Priorität: 28.08.85 CH 3703/85

(43) Veröffentlichungstag der Anmeldung:
01.04.87 Patentblatt 87/14

(45) Bekanntmachung des Hinweises auf die Patenterteilung:
23.11.88 Patentblatt 88/47

(84) Benannte Vertragsstaaten:
CH DE FR GB IT LI NL

(56) Entgegenhaltungen:
EP-A-0 071 955
FR-A-2 507 583
GB-A-975 777
GB-A-2 001 608
US-A-3 576 248

(73) Patentinhaber: SIG Schweizerische Industrie-Gesellschaft, CH- 8212 Neuhausen am Rheinfall (CH)

(72) Erfinder: Löw, Martin, Hauenbühlstrasse 310, CH-8214 Gächlingen (CH)
Erfinder: Hertrich, Wolfgang, Schützenstrasse 39a, CH- 8212 Neuhausen am Rheinfall (CH)

(74) Vertreter: White, William, Isler AG Patentanwalts-Bureau Walchestrasse 23, CH- 8006 Zürich (CH)

**Beschreibung**

Bei der Grosserienherstellung von Biskuits werden diese mittels einer Fördereinrichtung von einem an den Ausgang eines Backofens angeschlossenen Stapler zu einer Verpackungsmaschine transportiert. Die Fördereinrichtung umfasst meist mehrere parallel nebeneinander liegende Förderrinnen, z. B. Vibrationsförderrinnen oder Förderbänder Die Förderrinnen haben eine gewisse Speicherkapazität, so dass kurzfristige Betriebsunterbrüche der Verpackungsmaschine überbrückt werden können, ohne die kontinuierlich vom Ofen angelieferten Biskuits einem Ausschussbehälter zuführen zu müssen.

Bei bekannten Fördereinrichtungen gemäss GB-PS 2 001 608, GB-PS 2 093 225 und GB-PS 891 543 sind allerdings dieser Speicherkapazität Grenzen gesetzt, insbesondere wenn druckempfindliche Biskuits, wie "Creamcrackers" gefördert werden. Bei der GB-PS 2 001 608, gegen welche der Anspruch 1 abgegrenzt ist, sind zwei separat angetriebene Teilstrecken und dazwischen eine als Staustrecke dienende Brücke vorgesehen. Ein Reibrad drückt von oben auf den Biskuitstrang und unterstützt damit die Förderwirkung des Förderbandes. Die Anpresskraft des Reibrades wird durch Taster geregelt, welche auf die Schräglage der Biskuits ansprechen. Wenn bei dieser bekannten Vorrichtung der Betrieb der angeschlossenen Verpackungsmaschine unterbrochen wird, stauen sich die Biskuits auf dem laufenden Förderband. Je nach Staulänge kann dabei der Druck so gross werden, dass empfindliche Biskuits zerquetscht werden. Die Speicherkapazität dieser Vorrichtung ist also begrenzt.

Die GB-PS 2 093 225 zeigt eine Fördereinrichtung, bei welcher ein Förderband in einen nach untengebogenen, feststehenden Krümmer mündet. Beim Unterbruch (stillstand) der angeschlossenen Verpackungsmaschine staut sich die Biskuitkolonne und hebt sich vom Boden des Krümmers ab. Eine Lichtschranke misst diese Bewegung und regelt mit dem Messignal die Geschwindigkeit des Förderbandes. Damit wird das Problem der Staubildung zwar am Eingang zur Verpackungsmaschine gelöst, verschiebt sich jedoch zum Eintrittsende des Förderbandes, so dass auch diese Vorrichtung nur eine begrenzte Speicherkapazität hat.

Schliesslich ist aus der GB-PS 891 543 eine Vorrichtung bekannt, bei welcher die Förderkolonne der Biskuits in zwei separat angetriebene Teilstrecken aufgeteilt ist. Über der vorderen Teilstrecke ist ein Taster angeordnet, der bei steiler Lage der Biskuits auf dieser Teilstrecke eine Portioniereinrichtung betätigt. Über einer zwischen den Teilstrecken angeordneten festen Rinne ist ein weiterer Taster vorhanden, der bei Stillage der Biskuits den Antrieb der vorgeschalteten Teilstrecke abschaltet und zudem eine Klappe betätigt, welche die vom Backofen angelieferten Biskuits einer Stand-by-Verpackungsmaschine zuführt. Wegen der relativ geringen Speicherkapazität ist also hier eine zusätzliche Verpackungsmaschine erforderlich, was aufwendig ist.

Die Aufgabe der vorliegenden Erfindung besteht darin, eine wesentliche Steigerung der Speicherkapazität auch bei druckempfindlichen Biskuits zu ermöglichen. Diese Aufgabe wird durch die kennzeichnenden Merkmale der Ansprüche 1 und 7 gelöst.

Durch das sukzessive Abschalten der Teilstrecken bei Stauaufbau wird der Staudruck der nachgeförderten Biskuits gleich am Entstehungsort abgebaut und durch Reibung auf den Boden der Förderrinnen der Teilstrecken übertragen. Die Einrichtung kann deshalb beliebig lang dimensioniert werden, ohne dass bei unterbrochenem Betrieb der nachgeschalteten Verarbeitungsmaschine am vorderen Ende der Fördereinrichtung ein zu hoher Staudruck entsteht. Damit ist eine hohe Speicherkapazität der Fördereinrichtung erreicht, so dass kurzzeitige Betriebsunterbrüche (Unterbrechungen) der Verarbeitungsmaschine nicht zu Ausschuss führen. Mit der erfindungsgemässen Ausbildung kann nach einem Betriebsunterbruch die Fördereinrichtung auch problemlos wieder in Betrieb gesetzt werden, ohne dass Unterbrüche in der Biskuitkolonne entstehen.

Nachfolgend wird ein Ausführungsbeispiel der Erfindung anhand der Zeichnung erläutert. Darin zeigt:

Fig. 1 schematisch einen Längsschnitt durch eine Fördereinrichtung,

Fig. 2 einen Fühler mit Zweipunktschaltung,

Fig. 3 einen Fühler mit Mehrstufenschaltung, und

Fig. 4 einen Querschnitt durch die Einrichtung gemäss Fig. 1.

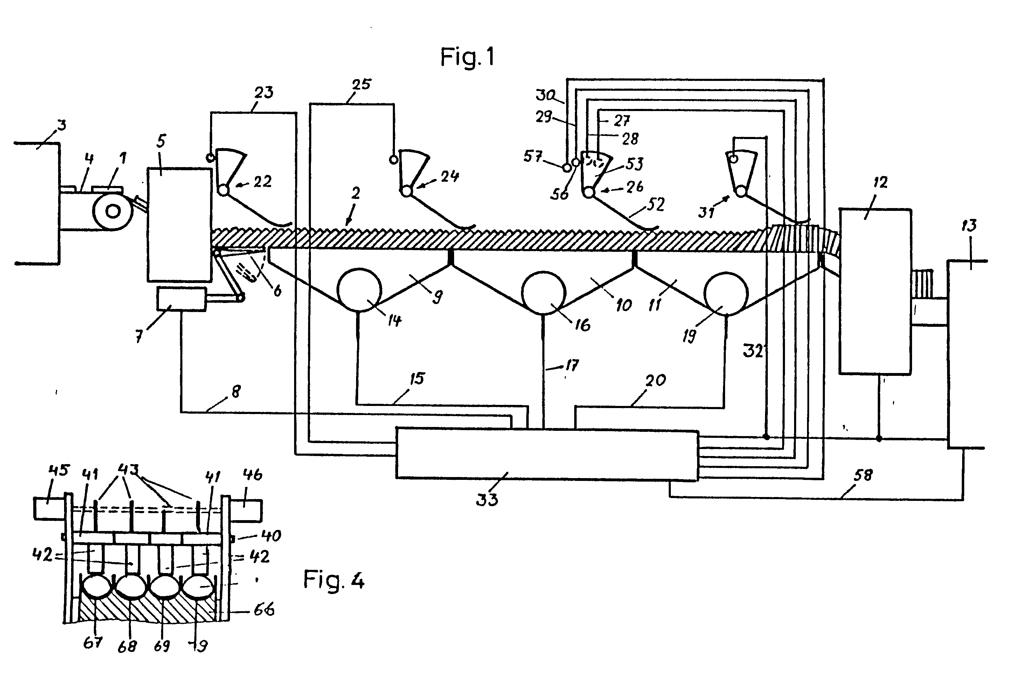

Im dargestellten Ausführungsbeispiel gemäss Fig. 1 ist die Fördereinrichtung zur besseren Übersicht in drei Teilstrecken aufgeteilt. Um die Speicherkapazität zu erhöhen, kann die Einrichtung jedoch durch mehrere zusätzliche Teilstrecken verlängert werden.

Von einem Backofen 3 werden Biskuits 1 auf einem Ofentransportband 4 einem Stapler 5 angeliefert, welcher die Biskuits 1 in eine Kolonne 2 aufschichtet, in welcher sie Fläche an Fläche stehend durch die Fördereinrichtung transportiert werden. Die drei Teilstrecken 9, 10, 11 der Fördereinrichtung bestehen aus drei Vibrationsförderern, die je durch einen separaten, durch Leitungen 15, 17, 20 von einer Regeleinrichtung 33 gesteuerten Motor 14, 16, 19 angetrieben sind. Der hintersten Teilstrecke 9 ist eine durch einen Magneten 7 betätigte Klappe 6 vorgeschaltete. Der Magnet 7 wird über eine Leitung 8 ebenfalls von der Regeleinrichtung 33 gesteuert. In ihrer Grundstellung führt die Klappe 6 den Biskuitstrang 2 auf die Teilstrecke 9, in der andern Stellung in einen Ausschussbehälter. Die vorderste Teilstrecke 11 mündet in einen Einleger 12, der einer Verpackungsmaschine 13 vorgeschaltet ist.

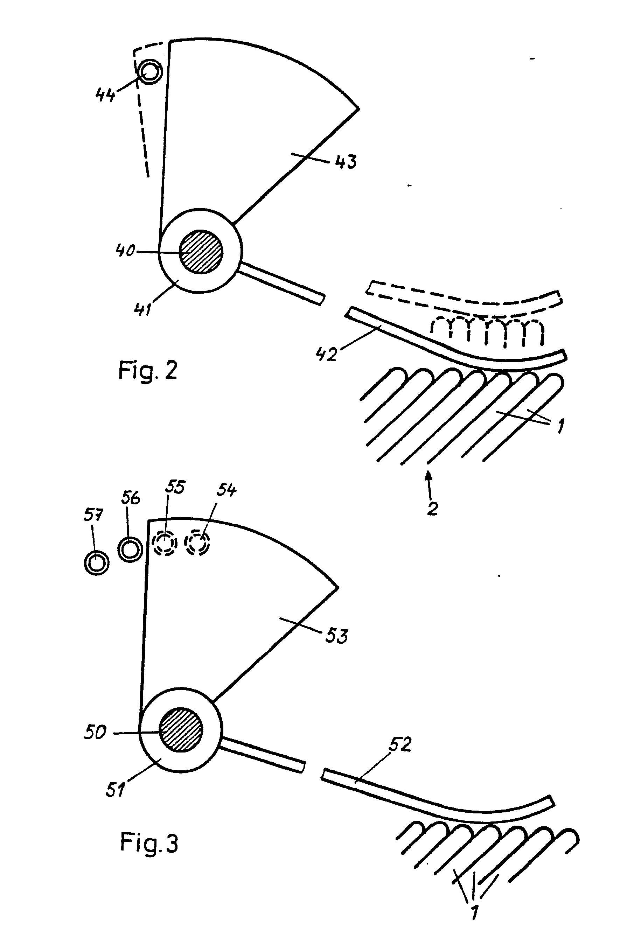

Jeder der drei Teilstrecken 9, 10, 11 ist ein Fühler 22, 24, 26 zugeordnet, der die Steilheit (Schräglage) der Biskuits 1 der Kolonne 2 abtastet. Die hinteren beiden Fühler 22, 24 haben Zweipunktcharakteristik. Wie in Fig. 2 dargestellt, tasten sie mit einem um eine Welle 40 schwenkbaren Tastarm 42 die Oberkante der Biskuits 1 des Stranges ab. Der Tastarm 42 ist über eine Hülse 41 mit einer Schaltfahne 43 verbunden, die bei steiler Lage der Biskuits 1 (strichliert gezeichnete Lage) eine Lichtschranke 44 unterbricht und damit ein Signal erzeugt, das über eine Leitung 23, 25 zur Regeleinrichtung 33 übertragen wird. Der Fühler 26 ist analog aufgebaut (Fig. 3). Er hat ebenfalls einen Tastarm 52, der über eine schwenkbar auf einer Welle 50 gelagerte Hülse 51 mit einer Schaltfahne 53 verbunden ist. Beim Fühler 26 sind jedoch vier Lichtschranken 54, 55, 56, 57 angeordnet, die entsprechend dem Neigungswinkel der Biskuits 1 nacheinander unterbrochen werden. Der Fühler 26 misst also die Steilheit der Biskuits in mehreren Stufen. Die Lichtschranken 54 - 57 sind wiederum über Leitungen 27 - 30 mit der Regeleinrichtung verbunden.

Alle drei Fühler 22, 24, 26 tasten die Steilheit der Biskuits jeweils am hinteren Ende der zugeordneten Teilstrecke 9, 10, 11 ab. Wenn die Lichtschranken 44 bzw. 57 unterbrochen sind, sind also diese Teilstrecken 9, 10, 11 jeweils voll gefüllt, d.h. sie haben ihre maximale Speicherkapazität erreicht.

Am vorderen Ende der vordersten Teilstrecke 11 ist noch ein weiterer Fühler 31 angeordnet, der gleich wie die Fühler 22, 24 aufgebaut ist. Sein Signal wird über eine Leitung 32 der Regeleinrichtung 33 und zudem dem Einleger 12 und der Verpackungsmaschine 13 zugeführt.

Wie in Fig. 4 dargestellt ist, sind mehrere Förderrinnen 67, 68, 69, 70 in jeder Teilstrecke auf einem gemeinsamen Träger 66 nebeneinander angeordnet. Jeder Rinne 67 - 70 ist ein Tastarm 42 zugeordnet. Die Testarme 42 sind mittels je einer Hülse 41 auf einer gemeinsamen Welle 40 gelagert. Die Lichtschranke, bestehend aus einer Lichtquelle 45 und einem Empfänger 46, ist für alle Schaltfahnen 43 gemeinsam, so dass der Lichtstrahl unterbrochen wird, wenn in mindestens einer der parallel nebeneinander liegenden Förderrinnen 67 - 70 die Biskuits 1 der Kolonne 2 steil (hochkant) stehen. Auch die Fühler 22 - 26 haben eine für alle Rinnen gemeinsame Lichtschranke 44 bzw. Lichtschranken 54 - 57. Hingegen besitzt jede der Fahnen der nebeneinander angeordneten Fühler 31 eine separate Lichtschranke.

Im Normalbetrieb ist die Biskuitkolonne 2 etwa in der in Fig. 1 dargestellten Lage. Vor der Verpackungsmaschine 12, 13 sind die Biskuits 1 in senkrechte Lage aufgestaut und werden vom Einleger 12 taktweise ergriffen. Falls der Nachschub zu gering ist, senkt sich der Tastarm des Fühlers 31 ab. Seine Schaltfahne tritt aus der entsprechenden Lichtschranke, so dass ein Signal an der Leitung 32 entsteht. Dieses Signal bewirkt am Einleger 12 und der Verpackungsmaschine 13 einen oder mehrere Leertakte, so dass sich vor dem Einleger wieder ein Stau bildet.

Bei Betriebsunterbruch der Verpackungsmaschine 13 wandert dieser Stau auf der Darstellung nach Fig. 1 nach links. Die Biskuits 1 stellen sich sukzessive auf. Wenn der Stau den Fühler 26 erreicht hat, schwenkt seine Schaltfahne 53, bis die letzte Lichtschranke 57 unterbrochen ist. Ein logischer Schaltkreis in der Regeleinrichtung 33 schaltet den Antriebsmotor 19 aus, sobald auf der Leitung 30 das Signal ansteht, dass die Lichtschranke 57 unterbrochen ist und gleichzeitig über die Leitung 58 gemeldet wird, dass die Verpackungsmaschine 13 stillsteht.

Bei abgestellter Teilstrecke 11 übertragen die stehenden Biskuits 1 den auf sie ausgeübten Staudruck auf die Rinnenböden, so dass der Eingang zum Einleger 12 entlastet wird.

Der Stau setzt sich weiter nach links fort, bis er den Fühler 24 erreicht, der wiederum über die Regeleinrichtung 33 die Teilstrecke 10 abschaltet, wenn gleichzeitig die Teilstrecke 11 stillsteht. Schliesslich erreicht der Stau den Fühler 22 am hinteren Ende der hintersten Teilstrecke 9. Dieser Fühler schaltet ebenfalls den Antrieb der Teilstrecke 9 aus, wenn zugleich die Teilstrecke 10 stillsteht, und öffnet gleichzeitig die Klappe 6, so dass bei vollständig gefüllter Fördereinrichtung, wenn also alle Biskuits 1 auf allen Teilstrecken 9, 10, 11 senkrecht stehen, die weiter vom Ofentransportband 4 nachgelieferten Biskuits 1 in den Ausschussbehälter fallen.

Durch das sukzessive Stillsetzen der Teilstrecken 11, 10, 9 wird erreicht, dass der Staudruck in der Biskuitkolonne 2 den zulässigen Grenzwert nicht übersteigen kann, auch wenn die Fördereinrichtung sehr lang ist und deshalb eine grosse Speicherkapazität hat.

Beim Wiedereinschalten der Verpackungsmaschine 12, 13 verschwindet das Signal auf der Leitung 58 und damit eine der beiden Bedingungen zum Ausschalten des Motors 19. Dieser wird deshalb eingeschaltet und damit nach einer eingebauten Verzögerung auch die Motoren 16 und 14.

Die Geschwindigkeit der Motoren 16 und 14 wird dabei durch den Stufenfühler 26 geregelt, indem die Drehzahl der Motoren 14, 16, und damit die Fördergeschwindigkeit der Teilstrecken 9, 10, gering ist, wenn sämtliche Lichtschranken 54 - 57 durch die Fahne 53 unterbrochen sind. Mit der sukzessiven Freigabe der Lichtschranken 57, 56, 55, 54 wird die Drehzahl der Motoren 14, 16 stufenweise erhöht. Damit wird ein reibungsloses Anlaufen der Fördereinrichtung erreicht, ohne dass sich Unterbrüche in der Biskuitkolonne 2 bilden können.

Da der Motor 19 nicht vom Fühler 26 geregelt ist und gleich zu Beginn mit einer nominellen, dem Takt der Verpackungsmaschine 13 angepassten Geschwindigkeit läuft, bildet sich gleich beim Einschalten der Fördereinrichtung an der Stelle des Fühlers 26 eine Mulde. Damit ist sichergestellt, dass die anlaufende Biskuitkolonne 2 keinen hohen Staudruck vor dem Einleger 12 entwickelt. Die Mulde am Fühler 26 bleibt durch die Drehzahlregelung der Motoren 14, 16 auch nach dem Anlaufen erhalten.

Um die Gefahr eines zu hohen Staudrucks der Biskuitkolonne vor dem Einleger 12 weiter zu verringern, kann der Einleger 12 und die Verpackungsmaschine 13 nach dem Anlaufen für kurze Zeit auch mit einer höheren als der nominellen Betriebsgeschwindigkeit betrieben werden.

Die Teilstrecken 9, 10 können auch durch einen gemeinsamen Motor über je eine Schaltkupplung angetrieben werden. Statt der stufenweisen Abtastung der Steilheit der Biskuits durch den Fühler 26 eignet sich auch eine Analogabtastung, bei welcher das Ausgangssignal des Fühlers 26 stetig mit der Steilheit der Biskuits ändert.

Es kann wünschenswert sein, die beschriebene Drehzahlregelung der Motoren 14, 16 im Normalbetrieb der Fördereinrichtung ausser Betrieb zu setzen, so dass die Motoren 14, 16 mit ihrer Nominaldrehzahl laufen, unabhängig von der Stellung des Fühlers 26. Dies ist von Vorteil, wenn im Normalbetrieb der Fördereinrichtung ab und zu Biskuit-Stränge von Hand eingelegt werden und die Anlieferung der Biskuits 1 vom Ofen 3 nicht ganz regelmässig erfolgt. Die Fördereinrichtung verkraftet solche Unregelmässigkeiten ohne weiteres, ohne dass dazu die Fördergeschwindigkeit variiert werden müsste. Die Regeleinrichtung 33 kann zu diesem Zweck einen logischen Schaltkreis aufweisen, welcher die Drehzahlregelung beim ersten Absenken eines der nebeneinander angeordneten Fühler 31 ausser Betrieb setzt, und erst wieder einschaltet, wenn der Motor 14 ausgeschaltet wird. In diesem Fall ist also die Regelung der Fördergeschwindigkeit der Teilstrecken 9, 10 bloss während der Anlaufphase der Fördereinrichtung im Betrieb.

**Patentansprüche**

1. Verfahren zur Förderung von hochkant, Fläche an Fläche stehenden flachen Gegenständen (1), insbesondere Biskuits, in mindestens einer Kolonne, die in mehrere Teilstrecken (9, 10, 11) mit je einem Antrieb (14, 16, 19) aufgeteilt ist und an ihrem vorderen Ende in einer Verarbeitungsmaschine (12, 13) mündet, wobei in jeder Teilstrecke (9, 10, 11) ein Fühler (22, 24, 26) zum Messen der Steilheit (Schräglage) der Gegenstände (1) angeordnet ist, dadurch gekennzeichnet, dass jeder Fühler (22, 24, 26) den Antrieb der ihm zugeordneten Teilstrecke (9, 10, 11) abschaltet, wenn die Gegenstände (1) in der ihm zugeordneten Teilstrecke (9, 10, 11) steil sind (hochkant stehen) und die ihm nachgeschaltete Teilstrecke (10, 11) bzw., bezogen auf die vorderste Teilstrecke (11), die Verarbeitungsmaschine (12, 13) abgeschaltet ist, und dass jeder Fühler (22, 24, 26) den Antrieb seiner Teilstrecke (9, 10, 11) einschaltet bzw. aufrecht erhält, wenn mindestens eine dieser Bedingungen nicht erfüllt ist.

2. Verfahren nach Anspruch 1, dadurch gekennzeichnet, dass der vorderste Fühler (26) zudem die Antriebsgeschwindigkeit sämtlicher vorgeschalteter Teilstrecken (9, 10) regelt, zumindest für eine begrenzte Zeit nach deren Einschalten.

3. Verfahren nach Anspruch 2, dadurch gekennzeichnet, dass die Antriebsgeschwindigkeit der Teilstrecken (9, 10) stufenweise geregelt wird.

4. Verfahren nach einem der Ansprüche 1 bis 3, dadurch gekennzeichnet, dass der Fühler (22) der hintersten Teilstrecke (9) zusätzlich eine Entleerungsklappe (6) öffnet, wenn er die ihm zugeordnete Teilstrecke (9) abschaltet.

5. Verfahren nach einem der Ansprüche 1 bis 4, wobei jede Teilstrecke (9, 10, 11) mehrere parallele Förderrinnen (67 - 70) umfasst, und die jeweils nebeneinander liegenden Förderrinnen (67 - 70) gemeinsam angetrieben werden, dadurch gekennzeichnet, dass jede der gemeinsam angetriebenen Förderrinnen (67 - 70) einen Fühler hat, und dass der gemeinsame Antrieb abgeschaltet wird, wenn die Gegenstände (1) in mindestens einer der gemeinsam angetriebenen Förderrinnen (67 - 70) steil sind und der Antrieb der nachgeschalteten Teilstrecke (10, 11) bzw. die Verarbeitungsmaschine (12, 13) abgeschaltet ist.

6. Verfahren nach den Ansprüche 2 und 5, dadurch gekennzeichnet, dass die Antriebsgeschwindigkeit der hinteren Teilstrecken (9, 10) durch die am meisten gefüllte der nebeneinander liegenden vordersten Förderrinnen (67 - 70) geregelt wird.

7. Fördereinrichtung zur Durchführung des Verfahrens nach einem der Ansprüche 1 bis 6, dadurch gekennzeichnet, dass die Fühler (22, 24, 26) mit je einer logischen Schaltung verbunden sind, deren anderer Eingang ein Einschaltsignal der nachgeschalteten Teilstrecke (10, 11) bzw. der Verarbeitungsmaschine (12, 13) ist, und deren Ausgang den Antrieb (14, 16, 19) der dem Fühler (22, 24, 26) zugeordneten Teilstrecke (9, 10, 11) ein- bzw. ausschaltet.

8. Einrichtung nach Anspruch 7, dadurch gekennzeichnet, dass die Fühler Taster (22, 24, 26) sind, die die Steilheit (Schräglage) der Gegenstände (1) jeweils am hinteren Ende der Teilstrecke (9, 10, 11) abtasten.

9. Einrichtung nach Anspruch 7 oder 8 zur Durchführung des Verfahrens nach Anspruch 2 oder 3, dadurch gekennzeichnet, dass der vorderste Fühler (26) ein Ausgangssignal (27, 30) liefert, welches mit zunehmender Steilheit (Schräglage) der Gegenstände (1) in der vordersten Teilstrecke (11) stetig oder in mehreren Stufen ändert.

10. Einrichtung nach einem der Ansprüche 7 bis 9, dadurch gekennzeichnet, dass die Fühler (22, 24, 26) einen auf der Oberkante der Gegenstände (1) aufliegenden schwenkbaren Tastarm (42, 52) haben, der mit einer Fahne (43, 53) verbunden ist, und dass die Stellung der Fahne (43, 53) durch mindestens eine Lichtschranke (44, 54 - 57) ermittelbar ist.

## Claims

1. Method for conveying flat objects (1), in particular biscuits, in an upright position with their surfaces adjacent to one another in at least one file, which is divided into a plurality of sections (9, 10, 11) with a respective drive (14, 16, 19) and the front end of which leads into a processing machine (12, 13), a detector (22, 24, 26) for measuring the steepness (oblique position) of the objects (1) being arranged in each section (9, 10, 11), characterised in that each detector (22, 24, 26) disconnects the drive of the section (9, 10, 11) associated with it when the objects (1) in the section (9, 10, 11) associated with it are in a steep position (upright) and the section (10, 11) following it or, relative to the front section (11), the processing machine (12, 13) is stopped, and that each detector (22, 24, 26) connects or maintains the drive of its section (9, 10, 11) if at least one of these conditions is not fulfilled.

2. Method according to claim 1, characterised in that the front detector (26) also controls the drive speed of all the preceding sections (9, 10), at least for a limited time after they are started.

3. Method according to claim 2, characterised in that the drive speed of the sections (9, 10) is controlled in a stepped manner.

4. Method according to one of claims 1 to 3, characterised in that the detector (22) of the rear section (9) additionally opens a discharge flap (6) when it stops the section (9) associated with it.

5. Method according to one of claims 1 to 4, in which each section (9, 10, 11) comprises a plurality of parallel conveyor troughs (67 - 70) and the conveyor troughs (67 - 70) which are in each case disposed next to one another have a common drive, characterised in that each of the conveyor troughs (67 - 70) with a common drive comprises a detector, and that the common drive is disconnected when the objects (1) in at least one of the conveyor troughs (67 - 70) with a common drive are in a steep position and the drive of the following section (10, 11) or the processing machine (12, 13) is disconnected.

6. Method according to claims 2 and 5, characterised in that the drive speed of the rear sections (9, 10) is controlled by the front conveyor troughs (67 - 70) disposed next to one another which are the fullest.

7. Conveying device for carrying out the method according to one of claims 1 to 6, characterised in that the detectors (22, 24, 26) are connected to a respective logic circuit, the other input of which is a signal for starting the following section (10, 11) or the processing machine (12, 13), and the output of which connects or disconnects the drive (14, 16, 19) of the section (9, 10, 11) associated with the detector (22, 24, 26).

8. Device according to claim 7, characterised in that the detectors are sensors (22, 24, 26) which sense the steepness (oblique position) of the objects (1) at the rear end of the section (9, 10, 11).

9. Device according to claim 7 or 8 for carrying out the method according to claim 2 or 3, characterised in that the front detector (26) delivers an output signal (27, 30) which varies continuously or in several steps as the steepness (oblique position) of the objects (1) in the front section (11) increases.

10. Device according to one of claims 7 to 9, characterised in that the detectors (22, 24, 26) comprise a pivotable sensing arm (42, 52), which rests on the upper edge of the objects (1) and is connected to a vane (43, 53), and that the position of the vane (43, 53) can be determined by at least one light barrier (44, 54 - 57).

## Revendications

1. Procédé pour le transport d'objets plats (1), en particulier de biscuits, placés de chant face contre face, en au moins une file qui est subdivisée en plusieurs sections de parcours (9, 10, 11) comportant chacune un mécanisme d'entraînement (14, 16, 19) et qui débouche, à son extrémité aval, dans une machine de traitement (12, 13), un capteur (22, 24, 26) pour la mesure de la pente (position inclinée) des objets (1) étant disposé dans chaque section de parcours (9, 10, 11), caractérisé en ce que chaque capteur (22, 24, 26) arrête le mécanisme d'entraînement de la section de parcours (9, 10, 11) qui lui est adjointe lorsque les objets (1) dans la section de parcours (9, 10, 11) qui lui est adjointe sont très redressés (placés de chant) et que la section de parcours située en aval (10, 11) ou, dans le cas de la section de parcours située le plus en aval (11), la machine de traitement (12, 13) est arrêtée, et en ce que chaque capteur (22, 24, 26) met ou maintient en marche le mécanisme d'entraînement de sa section de parcours (9, 10, 11) lorsque l'une au moins de ces conditions n'est pas remplie.

2. Procédé selon la revendication 1, caractérisé en ce que le capteur situé le plus en aval (26) règle en outre la vitesse d'entraînement de toutes les sections de parcours situées en amont (9, 10), au moins pendant une période limitée après la mise en marche de celles-ci.

3. Procédé selon la revendication 2, caractérisé en ce que la vitesse d'entraînement des sections de parcours (9, 10) est réglée par paliers.

4. Procédé selon l'une quelconque des revendications 1 à 3, caractérisé en ce que le capteur (22) de la section de parcours située le plus en amont (9) ouvre en plus un abattant de vidage (6), lorsqu'il arrête la section de parcours (9) qui lui est adjointe.

5. Procédé selon l'une quelconque des revendications 1 à 4, chaque section de parcours (9, 10, 11) comprenant plusieurs gouttières de transport parallèles (67 - 70) et les gouttières de transport (67 - 70) placées côte à côte étant entraînées en commun, caractérisé en ce que chacune des gouttières de transport (67 - 70) entraînées en commun comporte un capteur, et en ce que le mécanisme d'entraînement commun est arrêté lorsque les objets (1) dans l'une au moins des gouttières de transport (67 - 70) entraînées en commun sont très redressés et que le mécanisme d'entraînement de la section de parcours placée en aval (10, 11) ou la machine de traitement (12, 13) est arrêté.

6. Procédé selon les revendications 2 et 5, caractérisé en ce que la vitesse d'entraînement des sections de parcours amont (9, 10) est réglée par celles qui sont le plus remplies parmi les gouttières de transport placées côte à côte (67 - 70) qui sont situées le plus en aval.

7. Dispositif transporteur pour l'exécution du procédé selon l'une quelconque des revendications 1 à 6, caractérisé en ce que les capteurs (22, 24, 26) sont reliés chacun à un circuit logique, dont l'autre signal d'entrée est un signal de mise en marche de la section de parcours placée en aval (10, 11) ou de la machine de traitement (12, 13), et dont le signal de sortie met en marche ou arrête le mécanisme d'entraînement (14, 16, 19) de la section de parcours (9, 10, 11) adjointe au capteur (22, 24, 26).

8. Dispositif selon la revendication 7, caractérisé en ce que les capteurs sont des palpeurs (22, 24, 26) qui détectent le degré de redressement (position inclinée, des objets (1) à l'extrémité amont de la section de parcours (9, 10, 11) respective.

9. Dispositif selon la revendication 7 ou 8 pour l'exécution du procédé selon la revendication 2 ou 3, caractérisé en ce que le capteur situé le plus en aval (26) délivre un signal de sortie (27, 30) qui varie de façon constante ou en plusieurs échelons avec le degré croissant de redressement (position inclinée) des objets (1) dans la section de parcours placée le plus en aval (11).

10. Dispositif selon l'une quelconque des revendications 7 à 9, caractérisé en ce que les capteurs (22, 24, 26) comportent un bras palpeur pivotant (42, 52) qui est appliqué sur le bord supérieur des objets (1) et qui est raccordé à une palette (43, 53), et en ce que la position de la palette (43, 53) peut être déterminée par au moins un barrage photoélectrique (44, 54 - 57).

Fig.1

Fig. 4

0 216 726

Fig. 2

Fig. 3